# EUROPÄISCHE PATENTSCHRIFT

(11) **EP 3 275 730 B1**
(45) Veröffentlichungstag und Bekanntmachung des Hinweises auf die Patenterteilung: **08.01.2020**
(21) Anmeldenummer: 17001177.9
(22) Anmeldetag: 11.07.2017
(51) Int. Cl.: B60P 1/44

(54) **HUBLADEBÜHNE**
CANTILEVER LIFT
PLATE-FORME DE CHARGEMENT PAR LEVAGE

(30) Priorität: 28.07.2016 DE 102016009156
(43) Veröffentlichungstag der Anmeldung: 31.01.2018
(60) Teilanmeldung: 18000892.2
(73) Patentinhaber: Palfinger Tail Lifts GmbH, 27777 Ganderkesee (DE)
(72) Erfinder: Popken, Uwe, 26209 Hatten (DE); Bley, Hubert, 49681 Garrel (DE)
(74) Vertreter: Möller, Friedrich

(56) Entgegenhaltungen:
- WO-A2-2006/133964
- DE-A1- 4 430 568
- DE-A1-102006 010 261
- DE-U1- 8 020 141

## Beschreibung

Die Erfindung betrifft eine Hubladebühne wie z.B. in DE 802014 U1 offenbart.

Hubladebühnen dienen dazu, bei Fahrzeugen aller Art das Be- und Entladen von Gütern zu erleichtern. Dazu verfügen diese Hubladebühnen über eine heb- und senkbar und im Allgemeinen auch schwenkbar an einem Fahrzeug angelenkte Ladeplattform. Die Ladeplattform ist zu diesem Zweck an der Rückseite des Fahrzeugs mit Hilfe eines Hubwerks angeordnet, vorzugsweise im Bereich der Rückseite eines Aufbaus des Fahrzeuges. Das Hubwerk weist üblicherweise zumindest einen Linearantrieb wie beispielsweise einen Hydraulikzylinder oder eine elektromotorisch antreibbare Gewindespindel, zum Heben bzw. Senken der Ladeplattform auf. Zum Verschwenken der Ladeplattform ist vorzugsweise wenigstens ein weiterer Linearantrieb vorgesehen.

Das Hubwerk ist im Regelfall an einem Tragrohr befestigt, das wiederum mit dem Fahrzeug verbunden ist, insbesondere im Bereich von dessen Fahrzeugrahmen bzw. dessen Längsträgern. Eine parallelogrammförmige Ausbildung des Hubwerks mit vorzugsweise wenigstens zwei, zumindest im Wesentlichen parallel verschwenkbaren Lenkerarmen sorgt dafür, dass die Ladeplattform in parallelen Ebenen höhenverstellbar ist. Zusätzlich bzw. unabhängig davon, kann die Ladeplattform verschwenkt werden.

In der sogenannten Ruheposition liegt die Ladeplattform im Wesentlichen senkrecht ausgerichtet derart an der Rückseite des Aufbaus des Fahrzeuges an, dass eine an der Rückseite des Aufbaus angeordnete Öffnung durch die Ladeplattform verschließbar ist. In der sogenannten Betriebsposition ist die Ladeplattform im Wesentlichen horizontal ausgerichtet. Dabei ist die zumindest zwischen der Betriebsposition mit einem Niveau auf Höhe des Aufbaus bzw. der Ladefläche des Fahrzeugs zum Ein- und Ausladen von Gütern und der auch als Ladeposition bezeichneten Betriebsposition mit einer auf dem Boden aufliegenden Stellung der Ladeplattform zum Be- und Entladen von Gütern bewegbar. In der Ladeposition bzw. Stellung auf dem Boden ist die befahrbare Oberfläche bzw. Nutzfläche der Ladeplattform im Allgemeinen leicht geneigt gegenüber der Horizontalen ausgerichtet, da die Ladeplattform insgesamt einen keilförmigen Querschnitt aufweist. Dabei ist ein vom Fahrzeug abgewandter Querrand der Ladeplattform spitz zulaufend ausgebildet, während eine dem Fahrzeug zugewandte Querkante der Ladeplattform zur Anlenkung des Hubwerks entsprechend breiter bzw. höher ausgebildet ist.

Zum Betätigen der Ladeplattform, insbesondere zum Verstellen der Ladeplattform aus einer Ruheposition in eine Ladeposition, ist es für die Steuerung essentiell, den Neigungswinkel der Ladeplattform bezüglich einer Referenzebene zu kennen. Es ist bekannt, dass den Ladeplattformen Neigungssensoren zugeordnet sind, welche eine relative Lage der Ladeplattform erstellen können. Dazu wird zusätzlich zu den übrigen Einrichtungen zum Steuern bzw. Überwachen der Ladeplattform ein Sensor zur Bestimmung des Neigungswinkels an der Ladeplattform befestigt. Für eine verlässliche Messung des Neigungswinkels kommt es darauf an, den Sensor an einer entsprechenden Position anzubringen. Wenn der Sensor in einer anderen Position an der Ladeplattform befestigt wird, kann es zu fehlerhaften Messungen des Neigungswinkels kommen und infolge dessen zur Beschädigung der Güter oder gar zur Verletzung der Bedienperson.

Der Erfindung liegt daher die Aufgabe zugrunde, eine Hubladebühne zu schaffen, mit welcher der Betrieb auf eine einfache und sichere Art erfolgen kann.

Eine Hubladebühne zur Lösung dieser Aufgabe weist die Merkmale des Anspruchs 1 auf. Demnach ist es vorgesehen, dass eine Steckverbindung, die eine mit der Hubladebühnen befestigbare Steckdose mit einem Führungselement und einen Stecker aufweist, wobei der Stecker zum Verbinden mit der Steckdose auf dem Führungselement in die Steckdose führbar ist. Durch diese Steckverbindung bestehend aus einer Steckdose und einem Stecker lässt sich die Hubladebühne bzw. die Ladeplattform auf eine einfache und zuverlässige Weise kontaktieren. Bei dieser Steckverbindung kann es sich beispielsweise um ein Steuerungsmodul, ein Sensormodul oder dergleichen handeln. Dadurch, dass die Steckdose der Steckverbindung fest an der Hubladebühne bzw. der Ladeplattform befestigt ist, kann der Stecker nur an einer Position relativ zu der Hubladebühne befestigt werden. Ein andersartiges Anbringen des Steckers an die Hubladebühne ist somit nicht möglich. Daher ist ein Vorkonfektionieren bzw. eine Vorinstallation des Steckers und der möglicherweise darin integrierten elektrischen Module möglich. Der Betrieb der Hubladebühne wird dadurch nicht nur verlässlicher, sondern auch einfacher.

Ein weiteres bevorzugtes Ausführungsbeispiel der vorliegenden Erfindung kann es vorsehen, dass das Führungsmittel Schienen aufweist, entlang denen der Stecker mit den Schienen entsprechenden Gleitorganen bewegbar ist. Diese Schienen können beispielsweise als Vorsprünge, Nuten, Federn, Schwalbenschwänze oder dergleichen ausgebildet sein, wobei der Stecker zu diesen Ausführungsformen entsprechende Gegenstücke aufweist, um ein Gleiten bzw. Führen des Steckers entlang der Schienen in die Steckdose zu ermöglichen. Sobald der Stecker mit den Gleitorganen auf die Schienen des Führungsmittels gesetzt ist, muss der Stecker nur noch in die Steckdose geschoben werden. Ein fehlerhaftes Zusammenführen des Steckers und der Steckdose ist somit ausgeschlossen. Das Führungsmittel kann einstückig mit der Steckdose verbunden sein, sodass durch Montage der Steckdose gleichzeitig das Führungsmittel an der Hubladebühne bzw. an der Ladeplattform positioniert ist.

Insbesondere kann es vorgesehen sein, dass die Steckdose und der Stecker miteinander korrespondierende Rastmittel aufweisen, durch die eine lösbare Verbindung zwischen der Steckdose und dem Stecker herstellbar ist, sodass der Stecker von der Steckdose gehalten wird. Sobald der Stecker auf dem Führungsmittel entlanggleitend in der Steckdose positioniert ist, verrasten die beiden Gegenstände miteinander. Durch dieses miteinander Verrasten wird der Stecker in der Steckdose bzw. an der Hubladebühne gehalten. In dieser Stellung kann der Stecker auch nicht bei starken Schwingungen oder Schlägen aus der Steckverbindung bzw. von der Hubladebühne gelöst werden. Die Halterung des Steckers mittels einer Steckverbindung an der Hubladebühne stellt somit eine besonders sichere Positionierung an der Hubladebühne dar.

Bevorzugt kann es weiter vorgesehen sein, dass der Stecker und die Steckdose korrespondierende Kontaktelemente für eine elektrische Verbindung aufweisen, die beim Zusammenführen des Steckers mit der Steckdose ineinandergleiten. Bei diesen korrespondierenden Kontaktelementen kann es sich beispielsweise um Pins und entsprechende Fassungen bzw. Buchsen handeln. Bei den Kontaktelementen kann es sich allerdings auch um induktive Kupplungselemente oder dergleichen handeln.

Weiter kann es erfindungsgemäß vorgesehen sein, dass die Steckdose Befestigungselemente, insbesondere Bohrungen aufweist, über welche die Steckdose an beliebigen Positionen an der Ladeplattform positionierbar ist. Darüber hinaus ist es denkbar, dass die Befestigungselemente als Schrauben oder Nieten ausgebildet sind. Je nach Art und Beschaffenheit der Position an der Hubladebühne an der die Steckdose befestigt werden soll, können die Befestigungselemente verschiedenartig ausgebildet sein. Durch diese verschiedenartige Ausbildung der Befestigungselemente wird eine maximale Flexibilität für den Einsatz der vorliegenden Erfindung geschaffen.

Ein weiteres Ausführungsbeispiel der Hubladebühne kann es vorsehen, dass mindestens eine elektronische Komponente einer Steckverbindung mit einem Stecker und einer an der Hubladebühne befestigbaren Steckdose zugeordnet ist. Diese mindestens eine elektronische Komponente kann einer Steuerung zugeordnet sein, welche der Steuerung und/oder Überwachung des wenigstens einen Antriebs zum Heben, Senken und/oder Verschwenken der Ladeplattform dient. Dadurch, dass die mindestens eine elektronische Komponente der Steckverbindung zugeordnet ist, lässt sich die Komponente auf eine einfache Art und Weise an der Hubladebühne befestigen und ansteuern.

Bevorzugt kann es weiter vorgesehen sein, dass die mindestens eine elektronische Komponente in dem Stecker und/oder in der Steckdose integriert ist. Ein Ausführungsbeispiel sieht es vor, dass die elektronische Komponente in dem Stecker integriert ist. Somit wird der Stecker lediglich in die Steckdose geführt, damit der Stecker die nötige mechanische Befestigung an der Hubladebühne erfährt. Sämtliche elektronischen Komponenten zur Steuerung des Betriebs der Hubladebühne befinden sich im Stecker. Somit lässt sich die Hubladebühne durch ein bloßes Zusammenstecken des Steckers mit der Steckdose in Betrieb nehmen. Ein weiteres Ausführungsbeispiel kann es vorsehen, dass sowohl der Stecker als auch die Steckdose elektronische Komponenten aufweisen, die unabhängig voneinander oder zusammengesteckt in Kombination miteinander zusammenwirken. Auch hier lässt sich durch das einfache mechanische Zusammenfügen des Steckers mit der Steckdose die Hubladebühne in Betrieb nehmen.

Insbesondere kann es weiter vorgesehen sein, dass die mindestens eine elektronische Komponente mit dem Stecker und/oder der Steckdose lösbar, insbesondere austauschbar, verbunden ist. Somit ist es denkbar, dass dem Stecker verschiedenen Einsatzgebieten bzw. verschiedenen Anforderungen entsprechend elektronische Komponenten austauschbar zugeordnet werden. Dieses Zuordnen kann beispielsweise durch ein Hineinschieben der Komponente in den Stecker, durch eine Klickverbindung, eine Rastverbindung oder dergleichen erfolgen. Gleichermaßen kann die elektronische Komponente in einer Steckdose austauschbar mit selbiger verbunden sein.

Ein weiteres besonderes vorteilhaftes Ausführungsbeispiel der vorliegenden Erfindung kann es vorsehen, dass die elektronische Komponente ein Sensor, insbesondere ein Neigungswinkelmesser, ein Beschleunigungssensor, ein Warnsignal, eine optische Einrichtung, eine akustische Einrichtung, ein Datenspeicher, eine Sendeeinrichtung, eine Empfangseinrichtung oder eine Schnittstelle für weitere elektronische Einrichtungen ist. Durch die elektronische Miniaturisierung der Komponenten lassen sich auch mehrere der genannten Gegenstände in den Stecker bzw. in die Steckdose integrieren. Insbesondere der in den Stecker und/oder in die Steckdose integrierte Neigungswinkelmesser ist für den Betrieb der Hubladebühne essentiell, da hierdurch die relative Lage der Ladeplattform im Raum bestimmbar ist. Ausgehend von diesem Signal wird die weitere Bewegung der Hubladebühne gesteuert.

So kann es weiter vorgesehen sein, dass durch den Neigungswinkelmesser der relative Winkel der Ladeplattform zu einer, zwei oder drei Ebenen in einem kartesischen Koordinatensystem bestimmbar ist. Abhängig von der relativen Lage der Ladeplattform im Raum lässt sich diese durch Antriebe steuern. Dabei kann die Ladeplattform sowohl um eine, zwei oder drei Achsen den vorbestimmten Winkeln entsprechend verfahren werden.

Außerdem kann es vorgesehen sein, dass die Steckverbindung, insbesondere der Stecker und/oder die Steckdose, mit einer Steuereinheit, vorzugsweise mit Fußbetätigungsmitteln, für die Ladeplattform verbunden ist und die Steuereinheit über die Steckverbindung, insbesondere den Stecker und/oder die Steckdose ansteuerbar ist. Die in die Ladeplattform integrierte Fußsteuerung ist mit einer elektronischen Komponente in der Steckverbindung, insbesondere in dem Stecker, verbunden. Die durch die Fußbetätigung an die elektronische Komponente übermittelten Daten werden von selbiger an die Antriebe weitergeleitet, sodass die Ladeplattform sich entsprechend der Fußbedienung bewegt. Somit lässt sich über die Steckverbindung sowohl die Lage der Ladeplattform bestimmen, als auch Steuersignale für die Ausrichtung der Ladeplattform im Raum aufnehmen, um diese an die entsprechenden Antriebe weiterzuleiten.

Darüber hinaus kann es durch ein weiteres Ausführungsbeispiel vorgesehen sein, dass eine optische und/oder eine akustische Signaleinrichtung an der Ladeplattform über die Steckverbindung, insbesondere den Stecker und/oder die Steckdose, ansteuerbar sind. Eine Ladeplattform weist üblicherweise an den Seitenkanten Signalmittel wie beispielsweise Blinklichter auf. Diese Signalmittel lassen sich ebenfalls über die Steckverbindung bzw. über die in der Steckverbindung integrierte elektronische Komponente ansteuern bzw. mit elektrischer Energie versorgen.

Bevorzugt kann es außerdem vorgesehen sein, dass die Steckverbindung, insbesondere der Stecker und/oder die Steckdose, zur Energieversorgung und/oder Datenübertragung über eine Leitung mit einer Steuereinrichtung zum Steuern und/oder eine Einrichtung zum Überwachen der Antriebe verbunden sind. Somit lässt sich über die Steckverbindung bzw. über die in dem Stecker integrierte elektronische Komponente durch einfaches Zusammenstecken die gesamte Hubladebühne bzw. die Ladeplattform auf eine einfache Art und Weise in Betrieb nehmen. Durch das einfache Verbinden des Steckers mit der Steckdose können selbige auf eine verlässliche Art und Weise zusammengeführt werden.

Ein bevorzugtes Ausführungsbeispiel der Erfindung wird im Folgenden anhand der Zeichnung näher beschrieben. In dieser zeigt:
- Fig. 1: eine perspektivische Darstellung eines Steckers einer Steckverbindung,
- Fig. 2: eine perspektivische Darstellung einer Steckdose der Steckverbindung,
- Fig. 3: eine perspektivische Ansicht der Steckverbindung beim Zusammenfügen,
- Fig. 4: eine Seitenansicht der Steckverbindung gemäß der Fig. 3,
- Fig. 5: eine perspektivische Ansicht der zusammengesetzten Steckverbindung,
- Fig. 6: eine Seitenansicht der in Fig. 5 dargestellten Steckverbindung,
- Fig. 7: eine Hubladebühne mit der Steckverbindung, und
- Fig. 8: eine Darstellung einer Ausschnittsvergrößerung der Fig. 7.

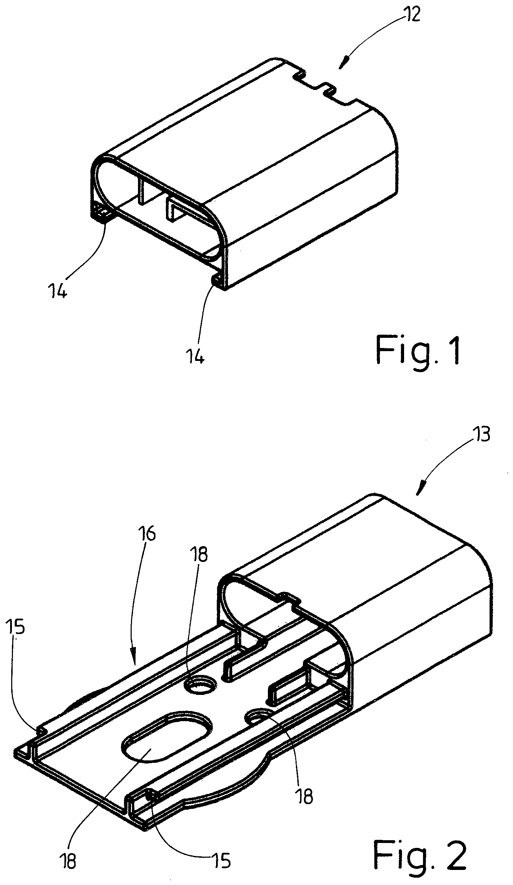

Zur elektrischen Kontaktierung einer Hubladebühne 10 zum Anbauen an ein Fahrzeug dient erfindungsgemäß eine Steckverbindung 11. Diese Steckverbindung 11 kann auch selbst als ein elektrisches Anbauteil, wie beispielsweise ein Sensor, ausgebildet sein. Die Steckverbindung besteht im Wesentlichen aus einem Stecker 12 (Fig. 1) und einer mit dem Stecker 12 korrespondieren Steckdose 13 (Fig. 2).

Zum Verbinden des Steckers 12 mit der Steckdose 13 weist der Stecker 12 zwei Gleitorgane 14 auf, welche sich auf Schienen 15 der Steckdose 13 fügen und verschieben lassen (Fig. 1, 2). Somit lässt sich der Stecker 12 auf einem die Schienen 15 aufweisenden Führungselement 16, welches einstückig mit der Steckdose 13 verbunden ist, führen und mit der Steckdose 13 in Kontakt bringen.

Sowohl der Stecker 12 als auch die Steckdose 13 sind bei dem hier dargestellten Ausführungsbeispiel quaderförmig ausgebildet und weisen in ihrem Inneren ein Hohlraum auf. Es ist jedoch auch denkbar, dass der Stecker 12 bzw. die Steckdose 13 eine andere Form aufweisen. Die Hohlräume des Steckers und der Steckdose 13 dienen der Aufnahme einer elektronischen Komponente 20. Diese mindestens eine elektronische Komponente 20 kann zur Steuerung wenigstens eines Antriebes der Hubladebühne 10 dienen. Bei dieser elektronischen Komponente 20 kann es sich jedoch auch um Sensoren jeglicher Art und andere elektronische Einrichtungen handeln.

Die Steckdose 13 kann derart ausgebildet sein, dass sie lediglich als Halterung für den die elektronische Komponente 20 aufweisenden Stecker 12 dient. Es ist erfindungsgemäß aber auch vorgesehen, dass die Steckdose 13 selbst elektronische Komponenten 20 aufweist, die durch den Stecker 12 lediglich angesteuert und/oder mit Energie versorgt werden. Darüber hinaus kann es vorgesehen sein, dass der Stecker 12 und die Steckdose 13 jeweils eine elektronische Komponente 20 aufweisen, die im zusammengesteckten Zustand einer bestimmten Funktion aufweisen.

Die Steckdose 13 weist für die Befestigung der Steckdose 13 bzw. der Steckverbindung 11 an der Hubladebühne 10 bzw. einer Ladeplattform 17 Bohrungen 18 auf. Diese Bohrungen 18 sind dem Führungselement 16 zugeordnet.

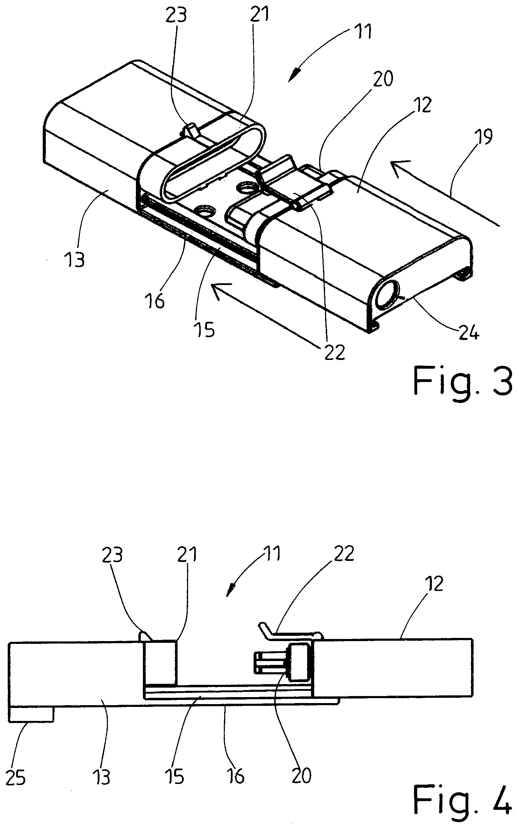

In der Fig. 3 ist dargestellt, wie der Stecker 12 mit den Gleitorganen 14 in Richtung 19 auf das Führungselement 16 geschoben wird, um dann in Kontakt mit der Steckdose 13 zu treten. Bei dem in der Fig. 3 dargestellten Ausführungsbeispiel weist der Stecker 12 eine elektronische Komponente 20 auf, welche in einer Aufnahme 21 positioniert ist, die in der Steckdose 13 angeordnet ist.

Der Stecker 12 weist für eine lösbare Verbindung mit der Steckdose 13 ein hebelartiges Rastmittel 22 auf, welches beim Zusammenfügen des Steckers 12 mit der Steckdose 13 über eine Rastnase 23 führbar und dort arretierbar ist. Durch diese rastende Verbindung des Steckers 12 mit der Steckdose 13 kann sichergestellt werden, dass die Steckverbindung 11 auch bei schweren Erschütterungen nicht gelöst wird.

Für die Ansteuerung der elektronischen Komponenten 20 im Stecker 12 bzw. für die Energieversorgung der elektronischen Komponente 20 weist der Stecker 12 einen Kabelausgang 24 auf, durch den ein nicht dargestelltes Kabel mit der elektronischen Komponente 20 verbindbar ist (Fig. 3).

Die Steckdose 13 kann des Weiteren ebenfalls einen Kabelausgang 25 aufweisen, über den sich die Steckverbindung 11 bzw. der Stecker 12 und/oder die Steckdose 13 mit der Ladeplattform 17 durch ein nicht dargestelltes Kabel verbinden lassen (Fig. 4). Dieses Kabel kann dann beispielsweise zur Kontaktierung eines Fußpedals 26, einer optischen Signaleinrichtungen oder dergleichen dienen.

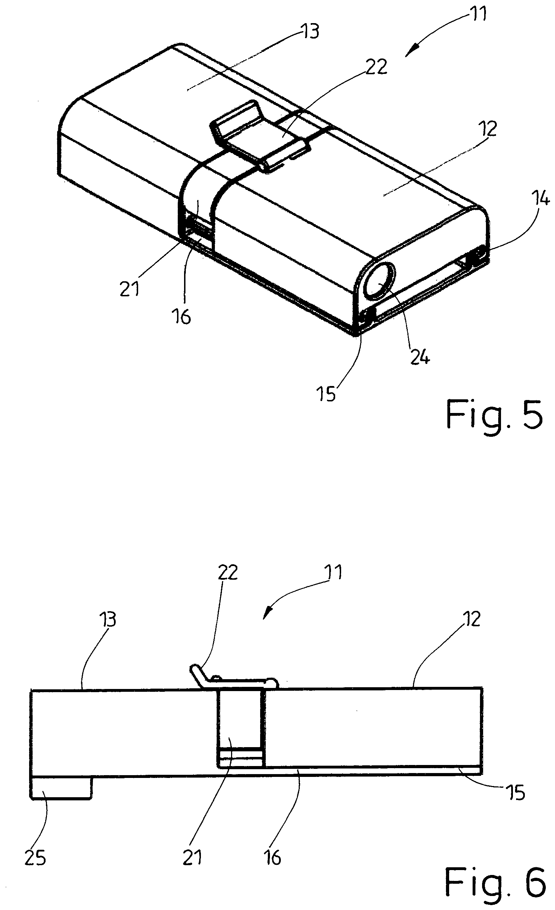

In den Fig. 5 und 6 ist die Steckverbindung 11 in dem zusammengefügten Zustand zu sehen. Die Länge der zusammengesteckten Steckverbindung 11 kann 50 mm bis 200 mm, insbesondere 75 mm bis 150 mm, vorzugsweise 100 mm betragen. Die Höhe der Steckverbindung 11 beträgt 5 mm bis 30 mm, insbesondere 20 mm. Die Länge des Steckers kann 20 mm bis 60 mm, insbesondere 30 mm bis 50 mm, vorzugsweise 48 mm, betragen, während die Breite 20 mm bis 50 mm, insbesondere 30 mm bis 40 mm, vorzugsweise 38 mm beträgt. Die Höhe des Steckers beträgt 5 mm bis 30 mm, insbesondere 10 mm bis 20 mm, vorzugsweise 18 mm. Die Länge der Steckdose 13 mit dem Führungselement 16 entspricht der Länge der Steckverbindung 11. Die Länge der Steckdose 13 kann jedoch auch von diesem Wert abweichen. Gleichermaßen entsprechen auch die Breite sowie die Höhe der Steckdose 13 der Breite und der Höhe der Steckverbindung 11. Auch hier ist es denkbar, dass die Dimensionierung der Steckdose 13 von der der Steckverbindung 11 abweicht.

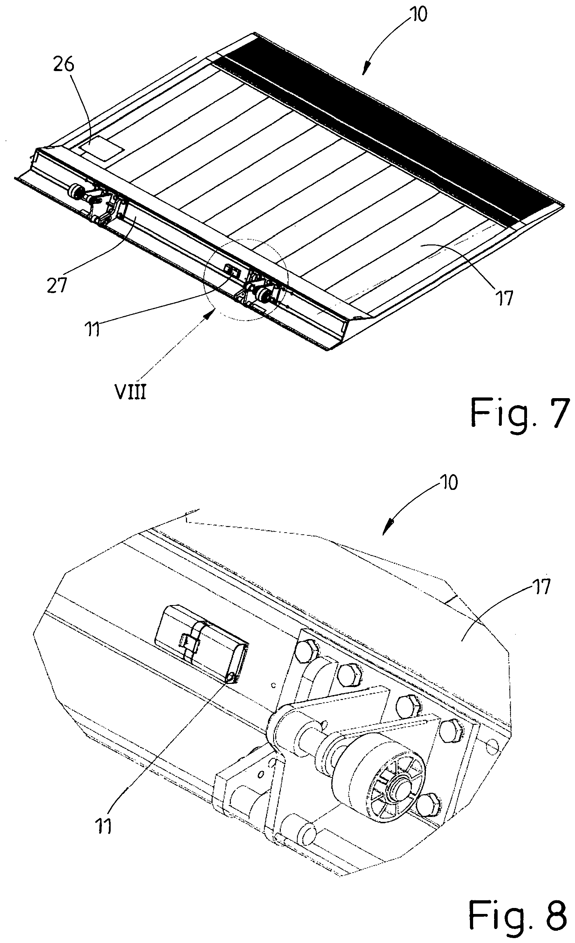

In der Fig. 7 ist eine Hubladebühne 10 dargestellt, welche an einer der Ladefläche zugewandten Seite 27 eine Steckverbindung 11 zugeordnet ist. Prinzipiell lässt sich die Steckverbindung 11 an jeder beliebigen Position an der Ladeplattform 17 befestigen. Die in der Fig. 8 dargestellte Ausschnittsvergrößerungen der Fig. 7 zeigt, dass die Steckverbindung 11 an einer besonders geschützten Position an der Ladeplattform 17 angeordnet ist. Aus Gründen der Übersichtlichkeit ist ein Kabel zur Kontaktierung der Steckverbindung 11 hier nicht dargestellt.

Für die Installation der Steckverbindung 11 ist lediglich der die elektronische Komponente 20 aufweisenden Stecker 12, welcher mit einem Kabel an die Steuereinrichtung des Fahrzeugs gekoppelt ist, in die an der Ladeplattform 17 befestigten Steckdose 13 einzurasten. Durch das Führungselement 16 ist die Position der Steckdose 13 und damit auch die Position der elektronischen Komponente 20 an der Hubladebühne 10 klar vordefiniert. Das heiß, dass beispielsweise Winkelsensoren derart vorkonfigurierbar bzw. vorinstallierbar sind, dass sie nach dem Einrasten in der Steckdose 13 sofort in Betrieb nehmbar sind, ohne dass eine eventuell notwendige Eichung oder Kalibrierung der Sensoren notwendig ist. Auf diese Weise lässt sich eine besonders einfache und sichere Inbetriebnahme jeglicher elektronischer Komponenten, insbesondere der Sensoren, gewährleisten.

### Bezugszeichenliste:

- 10: Hubladebühne
- 11: Steckverbindung
- 12: Stecker
- 13: Steckdose
- 14: Gleitorgan
- 15: Schiene
- 16: Führungselement
- 17: Ladeplattform
- 18: Bohrung
- 19: Richtung
- 20: elektronische Komponente
- 21: Aufnahme
- 22: Rastmittel
- 23: Rastnase
- 24: Kabelausgang
- 25: Kabelausgang
- 26: Fußpedal
- 27: Seite

## Patentansprüche

1. Hubladebühne (10) zum Anbau an ein Fahrzeug mit einer Ladeplattform (17), wobei eine Steckverbindung (11), die eine mit der Hubladebühne (10) befestigbare Steckdose (13) mit einem Führungselement (16) und einen Stecker (12) aufweist, wobei der Stecker (12) vor dem Verbinden mit der Steckdose (13) auf dem Führungselement (16) in die Steckdose (13) führbar ist.

2. Hubladebühne (10) nach Anspruch 1, **dadurch gekennzeichnet, dass** das Führungselement (16) Schienen (15) aufweist, entlang denen der Stecker (12) mit den Schienen (15) entsprechenden Gleitorganen (14) bewegbar ist.

3. Hubladebühne (10) nach Anspruch 1 oder 2, **dadurch gekennzeichnet, dass** die Steckdose (13) und der Stecker (12) miteinander korrespondierende Rastmittel (22, 23) aufweisen, durch die eine lösbare Verbindung zwischen der Steckdose (13) und dem Stecker (12) herstellbar ist, so dass der Stecker (12) von der Steckdose (13) gehalten wird.

4. Hubladebühne (10) nach einem der Ansprüche 1 bis 3, **dadurch gekennzeichnet, dass** der Stecker (12) und die Steckdose (13) korrespondierende Kontaktelemente für eine elektrische Verbindung aufweisen, die beim Zusammenführen des Steckers (12) mit der Steckdose (13) ineinander gleiten.

5. Hubladebühne (10) nach einem der Ansprüche 1 bis 4, **dadurch gekennzeichnet, dass** die Steckdose (13) Befestigungselemente, insbesondere Bohrungen (18) aufweist, über welche die Steckdose (13) an beliebigen Positionen an der Ladeplattform (17) positionierbar ist.

6. Hubladebühne (10) nach einem der vorhergehenden Ansprüche, **dadurch gekennzeichnet, dass** die Ladeplattform (17) ein Hubwerk aufweist, mit wenigstens einem Antrieb zum Heben, Senken und/oder Verschwenken der Ladeplattform (17) und mit mindestens einer einer Steuerung zugeordneten elektronischen Komponente (20) zur Steuerung des wenigstens einen Antriebs.

7. Hubladebühne (10) nach Anspruch 6, **dadurch gekennzeichnet, dass** die mindestens eine elektronische Komponente (20) der Steckverbindung (11) mit dem Stecker (12) und der an der Hubladebühne (10) befestigbaren Steckdose (13) zugeordnet ist.

8. Hubladebühne (10) nach Anspruch 6 oder 7, **dadurch gekennzeichnet, dass** die mindestens eine elektronische Komponente (20) in dem Stecker (12) und/oder in der Steckdose (13) integriert ist.

9. Hubladebühne (10) nach einem der Ansprüche 6 bis 8, **dadurch gekennzeichnet, dass** die mindestens eine elektronische Komponente (20) mit dem Stecker (12) und/oder der Steckdose (13) lösbar, insbesondere austauschbar, verbunden ist.

10. Hubladebühne (10) nach einem der Ansprüche 6 bis 9, **dadurch gekennzeichnet, dass** die elektronische Komponente (20) einen Sensor, insbesondere ein Neigungswinkelmesser, ein Beschleunigungssensor, ein Warnsignal, eine optische Einrichtung, eine akustische Einrichtung, ein Datenspeicher, eine Sendeeinrichtung, eine Empfangseinrichtung oder eine Schnittstelle für weitere elektronische Einrichtungen ist.

11. Hubladebühne (10) nach Anspruch 10, **dadurch gekennzeichnet, dass** durch den Neigungswinkelmesser der relative Winkel der Ladeplattform (17) zu einer, zwei oder drei Ebenen in einem kartesischen Koordinatensystem bestimmbar ist.

12. Hubladebühne (10) nach einem der Ansprüche 6 bis 11, **dadurch gekennzeichnet, dass** die Steckverbindung (11), insbesondere der Stecker (12) und/oder die Steckdose (13), mit einer Steuereinheit, vorzugsweise mit Fußbetätigungsmitteln (26), für die Ladeplattform (17) verbunden ist und die Steuereinheit über die Steckverbindung (11), insbesondere den Stecker (12) und/oder die Steckdose (13), ansteuerbar ist.

13. Hubladebühne (10) nach einem der Ansprüche 6 bis 12, **dadurch gekennzeichnet, dass** eine optische und/oder akustische Signaleinrichtung an der Ladeplattform (17) über die Steckverbindung (11), insbesondere den Stecker (12) und/oder die Steckdose (13), ansteuerbar ist.

14. Hubladebühne (10) nach einem der Ansprüche 6 bis 13, **dadurch gekennzeichnet, dass** die Steckverbindung (11), insbesondere der Stecker (12) und/oder die Steckdose (13), zur Energieversorgung und/oder Datenübertragung über eine Leitung mit einer Steuereinrichtung zum Steuern und/oder einer Einrichtung zum Überwachen der Antriebe verbunden ist.

## Claims

1. Cantilever lift (10) for attachment to a vehicle having a loading platform (17), wherein a plug-in connection (11), which has a socket (13) that can be fixed to the cantilever lift (10) with a guide element (16) and a plug (12), wherein the plug (12) can be guided into the socket (13) on the guide element (16) before the connection to the socket (13).

2. Cantilever lift (10) according to Claim 1, **characterized in that** the guide element (16) has rails (15), along which the plug (12) can be moved with sliding members (14) corresponding to the rails (15).

3. Cantilever lift (10) according to Claim 1 or 2, **characterized in that** the socket (13) and the plug (12) have mutually corresponding latching means (22, 23), by means of which a detachable connection can be produced between the socket (13) and the plug (12), so that the plug (12) is held by the socket (13).

4. Cantilever lift (10) according to one of Claims 1 to 3, **characterized in that** the plug (12) and the socket (13) have corresponding contact elements for an electrical connection, which latch into one another as the plug (12) and the socket (13) are guided together.

5. Cantilever lift (10) according to one of Claims 1 to 4, **characterized in that** the socket (13) has fixing elements, in particular holes (18), via which the socket (13) can be positioned at any desired positions on the loading platform (17).

6. Cantilever lift (10) according to one of the preceding claims, **characterized in that** the loading platform (17) has a lifting mechanism having at least one drive for lifting, lowering and/or pivoting the loading platform (17), and having at least one electronic component (20) assigned to a controller for controlling the at least one drive.

7. Cantilever lift (10) according to Claim 6, **characterized in that** the at least one electronic component (20) is assigned to the plug-in connection (11) having the plug (12) and the socket (13) that can be fixed to the cantilever lift (10).

8. Cantilever lift (10) according to Claim 6 or 7, **characterized in that** the at least one electronic component (20) is integrated in the plug (12) and/or in the socket (13).

9. Cantilever lift (10) according to one of Claims 6 to 8, **characterized in that** the at least one electronic component (20) is detachably, in particular interchangeably, connected to the plug (12) and/or the socket (13).

10. Cantilever lift (10) according to one of Claims 6 to 9, **characterized in that** the electronic component (20) is a sensor, in particular an inclinometer, an acceleration sensor, a warning signal, an optical device, an acoustic device, a data memory, a transmitting device, a receiving device or an interface for further electronic devices.

11. Cantilever lift (10) according to Claim 10, **characterized in that** by means of the inclinometer, the relative angle of the loading platform (17) to one, two or three planes in a Cartesian coordinate system can be determined.

12. Cantilever lift (10) according to one of Claims 6 to 11, **characterized in that** the plug-in connection (11), in particular the plug (12) and/or the socket (13), is connected to a control unit, preferably to foot actuating means (26), for the loading platform (17), and the control unit can be activated via the plug-in connection (11), in particular the plug (12) and/or the socket (13) .

13. Cantilever lift (10) according to one of Claims 6 to 12, **characterized in that** an optical and/or acoustic signal device on the loading platform (17) can be activated via the plug-in connection (11), in particular the plug (12) and/or the socket (13).

14. Cantilever lift (10) according to one of Claims 6 to 13, **characterized in that** for the power supply and/or data transmission, the plug-in connection (11), in particular the plug (12) and/or the socket (13), is connected via a line to a control device for controlling and/or a device for monitoring the drive.

## Revendications

1. Hayon élévateur (10) pour installation sur un véhicule doté d'une plateforme de chargement (17), dans lequel une connexion enfichable (11) comporte une prise (13) pouvant être fixée avec le hayon élévateur (10) et dotée d'un élément de guidage (16) et un connecteur (12), dans lequel le connecteur (12) peut être guidé dans la prise (13) sur l'élément de guidage (16) avant le raccordement à la prise (13).

2. Hayon élévateur (10) selon la revendication 1, **caractérisé en ce que** l'élément de guidage (16) comporte des rails (15), le long desquels le connecteur (12) peut être mû avec des organes de glisse (14) correspondant aux rails (15).

3. Hayon élévateur (10) selon la revendication 1 ou 2, **caractérisé en ce que** la prise (13) et le connecteur (12) comportent des moyens d'encliquetage (22, 23) correspondants l'un à l'autre, par lesquels un raccordement amovible entre la prise (13) et le connecteur (12) peut être établi, de sorte que le connecteur (12) est maintenu par la prise (13).

4. Hayon élévateur (10) selon l'une des revendications 1 à 3, **caractérisé en ce que** le connecteur (12) et la prise (13) comportent des éléments de contact correspondants pour un raccordement électrique, lesquels glissent l'un dans l'autre lorsque le connecteur (12) et la prise (13) sont assemblés.

5. Hayon élévateur (10) selon l'une des revendications 1 à 4, **caractérisé en ce que** la prise (13) comporte des éléments de fixation, en particulier des perforations (18), par le biais desquels la prise (13) peut être positionnée sur la plateforme de chargement (17) à des positions arbitraires.

6. Hayon élévateur (10) selon l'une des revendications précédentes, **caractérisé en ce que** la plateforme de chargement (17) comporte un mécanisme de levage, doté d'au moins un entraînement afin de lever, abaisser et/ou pivoter la plateforme de chargement (17) et doté d'au moins un composant électronique (20) associé à un moyen de commande afin de commander l'au moins un entraînement.

7. Hayon élévateur (10) selon la revendication 6, **caractérisé en ce que** l'au moins un composant électronique (20) est ordonné à la connexion enfichable (11) avec le connecteur (12) et la prise (13) positionnable sur le hayon élévateur (10).

8. Hayon élévateur (10) selon la revendication 6 ou 7, **caractérisé en ce que** l'au moins un composant électronique (20) est intégré dans le connecteur (12) et/ou dans la prise (13).

9. Hayon élévateur (10) selon l'une des revendications 6 à 8, **caractérisé en ce que** l'au moins un composant électronique (20) est raccordé au connecteur (12) et/ou à la prise (13) de manière amovible, en particulier interchangeable.

10. Hayon élévateur (10) selon l'une des revendications 6 à 9, **caractérisé en ce que** le composant électronique (20) est un capteur, en particulier un clinomètre, un capteur d'accélération, un signal d'alerte, un dispositif optique, un dispositif acoustique, un enregistreur de données, un dispositif d'émission, un dispositif de réception ou une interface pour des dispositifs électroniques supplémentaires.

11. Hayon élévateur (10) selon la revendication 10, **caractérisé en ce que** l'angle relatif de la plateforme de chargement (17) par rapport à un, deux ou trois plans peut être déterminé dans un système de coordonnées cartésiennes par le clinomètre.

12. Hayon élévateur (10) selon l'une des revendications 6 à 11, **caractérisé en ce que** la connexion enfichable (11), en particulier le connecteur (12) et/ou la prise (13), est raccordée à une unité de commande pour la plateforme de chargement (17), de préférence dotée de moyens de pédale (26), et l'unité de commande est commandable par le biais de la connexion enfichable (11), en particulier du connecteur (12) et/ou de la prise (13).

13. Hayon élévateur (10) selon l'une des revendications 6 à 12, **caractérisé en ce qu'**un dispositif de signal optique et/ou acoustique sur la plateforme de chargement (17) est commandable par le biais de la connexion enfichable (11), en particulier du connecteur (12) et/ou de la prise (13).

14. Hayon élévateur (10) selon l'une des revendications 6 à 13, **caractérisé en ce que** la connexion enfichable (11), en particulier le connecteur (12) et/ou la prise (13), est raccordé(e) par le biais d'un conducteur, pour l'alimentation en énergie et/ou la transmission de données, à un dispositif de commande pour la commande et/ou à un dispositif de contrôle de l'entraînement.
